# EUROPEAN PATENT SPECIFICATION

(11) **EP 2 852 186 B1**
(45) Date of publication and mention of the grant of the patent: **01.08.2018**
(21) Application number: 13306301.6
(22) Date of filing: 24.09.2013
(51) Int. Cl.: H04W 4/02, H04W 4/021, H04W 12/02

(54) **Method for providing a lbs network equipment with location areas of wireless communication equipments, and associated device**
Verfahren zur Bereitstellung einer LBS-Netzwerkeinrichtung mit Lokalisierungsbereichen drahtloser Kommunikationseinrichtungen und zugehörige Vorrichtung
Procédé permettant de fournir un équipement de réseau de service géodépendant (lbs) avec des zones d'emplacement d'équipements de communication sans fil et dispositif associé

(43) Date of publication of application: 25.03.2015
(73) Proprietor: Alcatel Lucent, 91620 Nozay (FR)
(72) Inventor: Betge-Brezetz, Stéphane, 91620 Nozay (FR); Aghasaryan, Armen, 91620 Nozay (FR); Kostadinov, Dimitre Davidov, 91620 Nozay (FR); Bouzid, Makram, 91620 Nozay (FR)
(74) Representative: Novagraaf Technologies

(56) References cited:
- US-A1- 2010 064 373
- US-A1- 2012 197 873
- BALAJI PALANISAMY ET AL: "Location Privacy with Road Network Mix-Zones", MOBILE AD-HOC AND SENSOR NETWORKS (MSN), 2012 EIGHTH INTERNATIONAL CONFERENCE ON, IEEE, 14 December 2012 (2012-12-14), pages 124-131, XP032401678, DOI: 10.1109/MSN.2012.27 ISBN: 978-1-4673-5808-8
- MARCO GRUTESER AND DIRK GRUNWALD: "Anonymous Usage of Location-Based Services Through Spatial andTemporal Cloaking", ACM, 2 PENN PLAZA, SUITE 701 - NEW YORK USA, 5 May 2003 (2003-05-05), XP040053835,

## Description

### Field of the Invention

The present invention relates to providing of network equipment(s) associated to location-based service(s) (or LBS) with information representative of location of wireless communication equipments.

### Background

In order to get personalized location-based services (or LBS), users of wireless communication equipments need to reveal personal information about themselves and in particular their current locations to a network equipment that is associated to the accessed LBS. For instance, personalized LBS offered for wireless communication equipments, such as smartphones or tablets, can be targeted advertising or recommendations of purchase, contacts or events interesting the user.

Given that exploitation of user personal and location profiles is raising more and more concerns regarding preserving of the privacy, it has been proposed to simply associate a pseudonym to each user location instead of associating the user identifier. Such a solution allows to access anonymously to a personalized LBS, but it appears to be insufficient as a LBS can use publicly available information, such as linked-in, public telephone directory or social network, to infer the real user identifier or name of the user who **is** behind his pseudonym. Furthermore, as the LBS may have the history of locations of the user when he previously asked for it, this LBS can also know all the locations where the user was (including locations that can be very sensitive for the user).

It has been also proposed to encrypt the user location to hide it when it is sent to an accessed LBS. Such a solution protects the user against intruders but not against LBS providers that are not honest or trustful entity.

It has been also proposed to "spatially cloak" the location of the requesting user by providing an enlarged location (including other users) to the accessed LBS, so that this requesting user cannot be easily distinguished. Such a solution allows the accessed LBS to provide its service (according to the precision of the enlarged location) while still preserving the user privacy because it guarantees that k other users are present with the user in the provided enlarged location. But, over time, the set of provided enlarged locations may allow the LBS to identify the user by exploiting external publicly available information. Related prior art is disclosed in the patent application publications US 2012/0197873 A1 and US 2010/0064373 A1 as well as in the publication "Location Privacy with Road Network Mix-Zones" by Balaji Palanisamy et al.

### Summary

So an object of this invention is to provide a location-based service that is accessed by a user wireless communication equipment with a location information ensuring the user anonymity while remaining sufficiently precise to allow this LBS to provide the user with useful personalized information.

The present invention is defined by the subject matter of the independent claims. In a first embodiment, a method is intended for providing a network equipment associated to a location-based service with information representative of the location of a wireless communication equipment associated to at least one user identifier, and comprises a step during which one determines a location area defining an information to be provided to the network equipment and including a current location of this wireless communication equipment and current location of at least a chosen number k of other wireless communication equipments accessing this location-based service and whose each preceding location was also included into each preceding location area previously determined for this wireless communication equipment.

The method may include additional characteristics considered separately or combined, and notably:
- when a surface of the determined location area is larger than a chosen threshold, one may determine a smaller location area defining the information to be provided to the network equipment and then one may provide the network equipment with this information associated with another user identifier also associated to the wireless communication equipment. This chosen threshold could be defined by the concerned location-based service and/or by the user per LBS in order to get the optimal benefit of the personalized service while preserving the user privacy;
- one may determine the smaller location area from a group of sets of current and preceding location areas sorted according to their respective surfaces and associated respectively to the different user identifiers that are associated to the wireless communication equipment;
- one may determine into the group a current location area having the smallest surface in order to become the smaller location area to be provided to the network equipment;
- in a variant one may determine into the group a current location area having a surface larger than a current location area having the smallest surface, in order to provide more flexibility in future determinations using its associated user identifier;
- the determined location area, defining the information to be provided to the network equipment, may include the current location of the wireless communication equipment and respective current locations of at least the chosen number k of other wireless communication equipments;
- the determined location area, defining the information to be provided to said network equipment, may include the current location of the wireless communication equipment and respective current locations of at least the chosen number k of other wireless communication equipments accessing the location-based service and whose each last location was also included into each preceding location area previously determined for the wireless communication equipment.

In a second embodiment, a computer program product comprises a set of instructions arranged, when it is executed by processing means, for performing a method such as the one above introduced, to allow providing a network equipment associated to a location-based service with information representative of location of wireless communication equipments each associated to at least one user identifier.

In a third embodiment, a device, intended for determining information representative of location of wireless communication equipments each associated to at least one user identifier, and arranged, when it receives a location request from one of these wireless communication equipments, for determining a location area defining this information and including a current location of the requesting wireless communication equipment and current location of at least a chosen number k of other wireless communication equipments whose each preceding location was also included into each preceding location area previously determined for this requesting wireless communication equipment.

The device may include additional characteristics considered separately or combined, and notably:
- it may be arranged, when a surface of the determined location area is larger than a chosen threshold, for determining a smaller location area defining an information and for associating this information with another user identifier also associated to the requesting wireless communication equipment;
- it may be arranged for determining the smaller location area from a group of sets of current and preceding location areas sorted according to their respective surfaces and associated respectively to the user identifiers that are associated to the requesting wireless communication equipment;
- it may be arranged for determining into the group a current location area having the smallest surface in order to become the smaller location area;
- in a variant, it may be arranged for determining into the group a current location area having a surface larger than a current location area having the smallest surface to provide more flexibility in future determinations using its associated user identifier;
- it may be arranged for determining a location area defining the information and including the current location of the requesting wireless communication equipment and respective current locations of at least the chosen number k of other wireless communication equipments; and/or
- it may be arranged for determining a location area defining the information and including the current location of the requesting wireless communication equipment and respective current locations of at least the chosen number k of other wireless communication equipments whose each location was also included into each preceding location area previously determined for the requesting wireless communication equipment.

### Brief Description of the Figures

Some embodiments of apparatus and/or methods in accordance with embodiments of the present invention are now described, by way of example only, and with reference to the accompagnying drawings, in which :
- The Figure 1 schematically and functionally illustrates a communication network to which are connected a wireless communication equipment and servers capable of implementing a method according to the invention,
- The Figure 2A schematically illustrates a first example of location area comprising the wireless communication equipment of figure 1 and determined for the latter at a first instant (t₁),
- The Figure 2B schematically illustrates a second example of location area comprising the wireless communication equipment of figure 1 and determined for the latter at a second instant (t₂), and
- The Figure 2C schematically illustrates a third example of location area comprising the wireless communication equipment of figure 1 and determined for the latter at a third instant (t₃) before being rejected because it does not offer enough flexibility for the future, and a fourth example of location area including the wireless communication equipment of figure 1 and hold at the third instant (t₃) instead of the third example of location area because it offers more flexibility for the future.

### Description of Embodiments

Hereafter is disclosed a method intended for providing a network equipment 1 associated to a location-based service (or LBS) with information representative of locations of wireless communication equipments 2 each associated to at least one user identifier.

In the following description it will be considered that the wireless communication equipments 2 are smartphones. But this is not limited to this kind of wireless communication equipment. Indeed, it concerns any type of wireless communication equipment capable of establishing communications with other wireless communication equipments or network equipments via at least one communication network, and notably tablets, for instance.

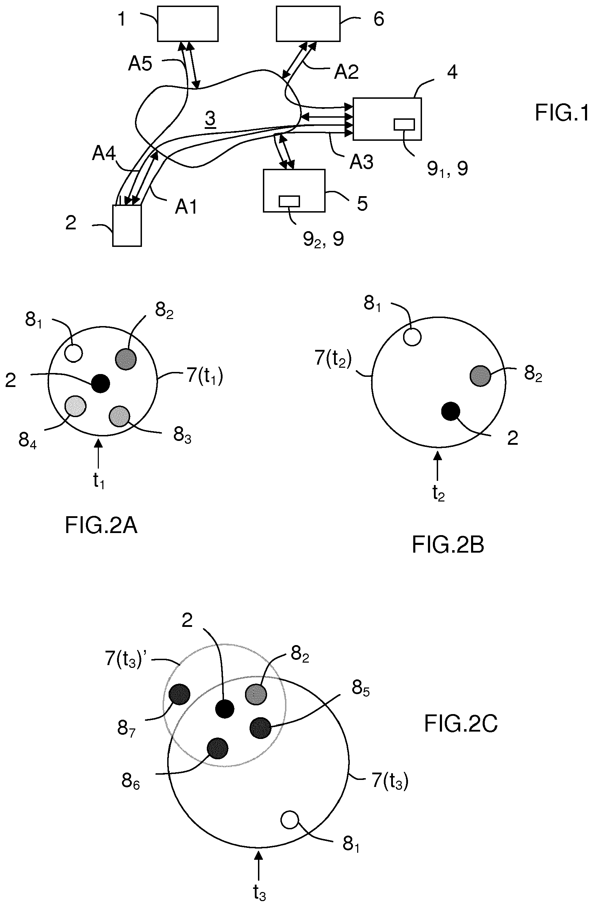

A communication network 3, to which wireless communication equipments 2 may be connected, is schematically illustrated in Figure 1. This communication network 3 comprises a wireless communication infrastructure, allowing connection of wireless communication equipments 2 of subscribers (or users), and a wired communication infrastructure (preferably with Internet access), allowing connection of, or access to, network equipments such as servers.

The network equipment 1 illustrated in Figure 1 is associated to at least one location-based service (or LBS). This means that it is notably in charge of providing location information, relative to registered users of wireless communication equipments 2, to at least one LBS. For instance, this network equipment 1 may comprise one, or each, LBS to which it is associated. In this case it provides also the personalized services offers by LBS(s) to the wireless communication equipments 2 that request them. Such a network equipment 1 may be a server, for instance.

It is important to note that each user of a wireless communication equipment 2 that may access to a LBS is associated to one or more user identifiers (or pseudonyms) that is/are known by the network equipment 1 (here a LBS server).

This LBS Server 1 represents a potential attacker against whom the user privacy must be protected. It offers a service in exchange for user identifier (or pseudonym) and user location information. The user identifiers (or pseudonyms) can be created, on behalf of the user, by a network equipment 6, connected to, or accessible via, the communication network 3 and belonging to a mobile telecommunication operator. This network equipment 6 may be a server intended for managing the user identifiers of each user authorized to access to the LBS server 1. So, it may perform usual operations such as creation, update and deletion. It may also communicate with the LBS server 1 to get requirements on the location accuracy, so that each location information, determined for a user and intended to be transmitted to the LBS server 1, matches these requirements.

It is also important to note that the LBS needs some minimum location accuracy (surface) in order to offer a relevant service that can be of interest for the user of the requesting wireless communication equipment 2.

As mentioned above, the method is intended for providing the network equipment 1 with information representative of locations of requesting wireless communication equipments 2.

This method is implemented each time a wireless communication equipment 2 needs to obtain a personalized service from a LBS associated to the network equipment 1, and therefore must request this personalized service to the network equipment 1 by sending (arrow A5) a request comprising an information representative of its location with a known user identifier.

This method comprises a step during which, each time the above mentioned need occurs, one determines a location area 7(tₙ) defining the information that must be provided to the network equipment 1, at an instant tₙ. Such a determined location area 7(tₙ) includes the current location of the requesting wireless communication equipment 2 and current location of at least a chosen number k of other wireless communication equipments 8ⱼ accessing to the location-based service and whose each preceding location was also included into each preceding location area 7(tₙ₋₁) that has been previously determined at an instant tₙ₋₁ for the requesting wireless communication equipment 2.

This allows to ensure that each user location information transmitted to the LBS server 1 "hides" the user among several other users despite his previous LBS accesses. So, the privacy of the user location is protected all along his access to the LBS and not only according to one access.

Preferably, and as illustrated in figure 2C, when the surface of the determined location area 7(tₙ) is larger than a chosen threshold (depending on the LBS requirements), one may determine a smaller location area 7(tₙ)' defining the information that must be provided to the network equipment 1. Then, one may provide the network equipment 1 with this last information associated with another user identifier that is also associated to the requesting wireless communication equipment 2. This case (illustrated in figure 2C) generally appears when other wireless communication equipments 8ⱼ that were previously located into preceding location areas 7(tₙ₋₁), 7(tₙ₋₂) are too far from the requesting wireless communication equipment 2 at instant tₙ.

This smaller location area 7(tₙ)' may be determined from a group of sets of current and preceding location areas 7(tₙ₋₁), 7(tₙ₋₂) sorted according to their respective surfaces and associated respectively to the user identifiers that are associated to the requesting wireless communication equipment 2.

For instance, one may determine into this group of sets the current location area that has the smallest surface in order to become the smaller location area that must be provided to the LBS server 1. In a variant, illustrated in figure 2C, one may determine into this group of sets the current location area 7(t₃)' that has a surface larger than the current location area having the smallest surface, in order to provide more flexibility in future determinations using its associated user identifier.

In order to increase the procured anonymity, the determined location area, defining the information to be provided to the network equipment 1, including preferably the current location of the wireless communication equipment and respective current locations of at least the chosen number k of other wireless communication equipments accessing the location-based service. In this case, it is still more preferable that the determined location area includes current locations of at least the chosen number k of other wireless communication equipments accessing the location-based service and whose each last location was also included into each preceding location area previously determined for the wireless communication equipment.

The determined location area is chosen in order (i) to have a surface whose value is sufficiently large with regards to the parameters/criteria defined by the concerned LBS and/or the user, and (ii) the trajectory/Historically Smallest Co-location set (or HSCO - defined below), associated to the user identifier (or pseudonym) and including the preceding location areas and the new current location, comprises at least k elements.

Figures 2A to 2C gives examples of location areas 7(tₙ) that allows to understand more easily the disclosed method.

The first location area 7(t₁) illustrated in figure 2A has been determined for the requesting wireless communication equipment 2 at an instant t₁. Each circle represents a wireless communication equipment 2 or 8ⱼ. The requesting wireless communication equipment 2 appears here with four other wireless communication equipments 8₁ to 8₄ (j = 1 to 4). They form together a group that can be called "co-location group" and denoted Co(7(t₁))=(2, 8₁, 8₂, 8₃, 8₄). The fact of being co-located with other Co(7(t₁)) members provides anonymity to the user 2 with respect to the LBS server 1. The larger is the cardinality k of the group, the higher is the procured anonymity. For instance, this cardinality k may be chosen at least equal to three (3). But it could equal to two (2) or greater than three (3).

This parameter k may be computed so that the HSCo contains a minimum of k other users (taking also a margin as described below) and that the surface of the location is small enough regarding the precision needed by the LBS (otherwise, another pseudonym may be created as described below). Moreover, this parameter k may be configurable by the concerned LBS and/or by the user and per LBS. Indeed, for a given user, it may also be different for each LBS (as all the LBS have not the same criticality regarding the privacy).

The second location area 7(t₂) illustrated in figure 2B has been determined for the requesting wireless communication equipment 2 at an instant t₂. The requesting wireless communication equipment 2 appears here with a group of two other wireless communication equipments 8₁ and 8₂ (j = 1 or 2). They form together a co-location group that can be denoted Co(7(t₂))=(2, 8₁, 8₂). Here, one is not only interested in the cardinality of Co(7(t₂)), which can be arbitrarily large, but also in the intersection of Co(7(t₁)) and Co(7(t₂)) for anonymity preservation. The result of this intersection can be called "Historically Smallest Co-location set" HSCo(7(t₁),7(t₂)) = {2, 8₁, 8₂}.

This intersection of "users" in the two location areas 7(t₁) and 7(t₂) is equal to or smaller than the smallest of the co-location groups Co(7(t₁)) and Co(7(t₂)) taken independently. The Historically Smallest Co-location set (HSCo(7(t₁),7(t₂)) becomes a reference set that will be used during the next determination of a location area 7(t₃). As this reference set becomes smaller and smaller, the surface of the next determined location area usually enlarges to maintain a required cardinality of HSCo.

When this surface becomes too large (as it is the case of the third location area 7(t₃) in figure 2C), the user identifier (or pseudonym) can be replaced in order to allow the initialization of a new history and the selection of a smaller location area 7(t₃)' allowing to form a new reference set HSCo(7(t₃)') equals to Co(7(t₃)') (in this case Co(7(t₃)')=(2, 8₂, 8₅, 8₆, 8₇).

In a general case, the update of the HSCo set for a given user identifier (or pseudonym) can be written as follows: HSCo(Sₜₙ) = HSCo(Sₜₙ₋₁) ∩ Co(7(tₙ)), where Hₜₙ₋₁ is a sequence of past location areas 7(tₙ₋₁), and Sₜₙ is the updated sequence of location areas including the current location area7(tₙ). Given that a telecommunication operator has the knowledge of the locations of the wireless communication equipments of its customers (notably thanks to the base station antenna to which they are connected), it may easily compute the HSCo(S), or at least a minimum value as wireless communication equipments of customers of other telecommunication operators may be present as well in the concerned location area. This minimum value of HSCo(S) is acceptable as it allows to be sure that at least the chosen number k of wireless communication equipments (accessing the location-based service) are in the concerned location area.

So, based on the knowledge of customer's locations, when a user wants to access an LBS while ensuring his privacy, a couple (user identifier, location area), ensuring that this user cannot be distinguished among others, is automatically computed.

Each determination of a location area 7(tₙ) may be carried out by a device 9 that may access to the current and preceding locations of the requesting wireless communication equipment 2 and to the current and preceding locations of each wireless communication equipment 8ⱼ whose preceding location(s) was (were) included into preceding location area(s) 7(tₙ₋₁) previously determined for the requesting wireless communication equipment 2.

This device 9 may equip at least one communication equipment 4 that is connected to, or accessible via, the communication network 3.

Such a device 9 is preferably made of software modules, at least partly. But it could be also made of electronic circuit(s) or hardware modules, or a combination of hardware and software modules (in this case the device 9 comprises also a software interface allowing interworking between the hardware and software modules). In the case where it is made of software modules, it constitutes a computer program product comprising a set of instructions that can run in at least one electronic equipment comprising processing means.

In the non-limiting example illustrated in figure 1, the device 9 comprises first 9₁ and second 9₂ parts (or modules) comprised respectively into first 4 and second 5 communication equipments that are connected to, or accessible via, the communication network 3. The respective functions of these two device parts 9₁ and 9₂ will be detailed below.

For instance, the first communication equipment 4 may be a location server that receives the location requests (arrow A1) from the requesting wireless communication equipment 2 and returns to the latter (2) (arrow A4) a user identifier (or pseudonym) with a location area 7(tₙ) that must be transmitted to the LBS server 1, so that the user's anonymity be preserved given the history of this user identifier (or pseudonym) with its associated location areas 7(tₙ). So, it acts as an orchestrator for the process of choosing the user identifier (or pseudonym) and the location area surface.

The first communication equipment 4 may communicate with the network equipment 6. More precisely, on request of its first device part 9₁, it may trigger (arrow A2) the network equipment 6 to get the set of available user identifiers (or pseudonyms) associated to the requesting wireless communication equipments 2 and known by the LBS to be accessed. The response of the network equipment 6 may contain as well the location accuracy requirements of the LBS.

For instance, the second device part 9₂ (here of the second communication equipment 5) may be in charge of storing the current and preceding locations of each requesting wireless communication equipment 2 and the current and preceding locations of each wireless communication equipment 8ⱼ whose preceding location(s) was (were) included into preceding location area(s) 7(tₙ₋₁) previously determined for the requesting wireless communication equipment 2. To this effect, the second device part 9₂ may maintain a first data structure comprising the current co-location (Co) sets for the users, and a second data structure comprising the historically shortest co-location (HSCo) sets for each user identifier (or pseudonym).

In order to infer a current co-location set, the second part 9₂ of the device 9 (that equips the second communication equipment 5) can use data available in the infrastructure of mobile telecommunication operators with regard to the geographical deployment of base stations (or antennas), and the knowledge of the wireless communication equipments that are connected to each antenna. Then, the smallest location area for a given user may be determined by the coverage area of the antenna to which the requesting wireless communication equipment 2 is connected.

The device part 9₁ may be also in charge of selecting the user identifier (or pseudonym) and location area in the case where more than one possibility exists. More precisely, if there are several user identifiers (or pseudonyms), each one associated with location areas 7(tₙ) with different sizes and with different sets of wireless communication equipments 2 and 8ⱼ, then the first part 9₁ of the device 9 (that equips the first communication equipment 4), compares them and selects the most appropriate user identifier (or pseudonym) and location area. The selection process takes into account several factors including the number of users who should disappear from the reference HSCo set of user identifiers (or pseudonyms) if a location area was used, and the surface of the location area compared to the requirements of the LBS.

On request of the first device part 9₁, the first communication equipment 4 gets for each received user identifier (or pseudonym) a series of location areas with respective HSCo(S) from the second communication equipment 5 (arrow A3). The request of the first device part 9₁ may comprise a parameter "iteration" whose value is representative of the surface (or rank) of the location area to be selected, when the different possible location areas are sorted (for instance in an increasing order of surface). For instance, an iteration value equal to 1 may request for the smallest possible location area for the requesting wireless communication equipment 2 designated by the considered user identifier (or pseudonym).

As mentioned before, the first device part 9₁ does not necessarily decide to take the smallest location area computed by the second device part 9₂ even when it satisfies the current anonymity requirement with respect to the cardinality of HSCo(S). Indeed, it can select a location area with a larger surface than the smallest one to provide more flexibility in future determinations regarding the considered user identifier (or pseudonym).

Finally, when the first device part 9₁ selects a valid couple (user identifier (or pseudonym), location area), it may trigger confirmation of this selection to the second device part 9₂ (arrow A3) in order to maintain the two data structures, and may trigger transmission of this valid couple to the requesting wireless communication equipment 2 (arrow A4). Then, the requesting wireless communication equipment 2 may transmit the received valid couple to the LBS server 1 (arrow A5).

It is important to note that in a variant of embodiment the first 9₁ and second 9₂ parts of the device 9 could be fully comprised into the first communication equipment 4 (here a location server).

The method offers several advantages:
- for the user, it allows to keep his privacy (by hiding his precise location) when he accesses over time a location-based service,
- for an operator, it allows to provide an added-value location service with privacy guarantees,
- for a location-based service, it allows to offer its services while respecting the privacy of its customer, even if data mining is performed using the location area history and publicly available information.

A person skilled in the art would readily recognize that steps of the various above-described methods can be performed by programmed computers. Herein, some embodiments are also intended to cover program storage devices, e.g., digital data storage media, which are machine or computer readable and encode machine- executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any routers shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for providing a network equipment (1) associated to a location-based service with information representative of location of a wireless communication equipment (2) associated to at least one user identifier, said method comprising a step during which one determines a location area defining said information to be provided to said network equipment (1) and including a current location of said wireless communication equipment (2) and current location of at least a chosen number k of other wireless communication equipments (8ⱼ) accessing said location-based service and whose each preceding location was also included into each preceding location area previously determined for said wireless communication equipment (2);
said method being **characterized in that**, when a surface of said determined location area is larger than a chosen threshold, one determines a smaller location area defining said information to be provided to said network equipment (1), and then one provides said network equipment (1) with said information associated with another user identifier also associated to said wireless communication equipment (2).

2. Method according to claim 1, wherein one determines said smaller location area from a group of sets of current and preceding location areas sorted according to their respective surfaces and associated respectively to said user identifiers that are associated to said wireless communication equipment (2).

3. Method according to claim 2, wherein one determines into said group a current location area having the smallest surface in order to become said smaller location area to be provided to said network equipment (1).

4. Method according to claim 2, wherein one determines into said group a current location area having a surface larger than a current location area having the smallest surface to provide more flexibility in future determinations using its associated user identifier.

5. Computer program product comprising a set of instructions arranged, when it is executed by processing means, for performing the method according to one of claims 1 to 4 to allow providing a network equipment (1) associated to a location-based service with information representative of location of wireless communication equipments (2) each associated to at least one user identifier.

6. Device (9) for determining information representative of location of wireless communication equipments (2) each associated to at least one user identifier, said device (9) being arranged, when it receives a location request from one of said wireless communication equipments (2), for determining a location area defining said information and including a current location of said requesting wireless communication equipment (2) and current location of at least a chosen number k of other wireless communication equipments (8ⱼ) whose each preceding location was also included into each preceding location area previously determined for said requesting wireless communication equipment (2);
**characterized in that** the device (9) is further arranged, when a surface of said determined location area is larger than a chosen threshold, for determining a smaller location area defining said information and for associating said information with another user identifier also associated to said requesting wireless communication equipment (2).

7. Device according to claim 6, wherein it is arranged for determining said smaller location area from a group of sets of current and preceding location areas sorted according to their respective surfaces and associated respectively to said user identifiers that are associated to said requesting wireless communication equipment (2).

8. Device according to claim 7, wherein it is arranged for determining into said group a current location area having the smallest surface in order to become said smaller location area.

9. Device according to claim 7, wherein it is arranged for determining into said group a current location area having a surface larger than a current location area having the smallest surface to provide more flexibility in future determinations using its associated user identifier.

## Patentansprüche

1. Verfahren zur Bereitstellung einer Netzwerkvorrichtung (1) in Verbindung mit einem standortbasierten Service mit Informationen, die für einen Standort einer drahtlosen Kommunikationsvorrichtung (2) stehen, die mit mindestens einer Benutzerkennung verknüpft ist, wobei das Verfahren einen Schritt umfasst, während dem ein Standortbereich bestimmt wird, der die Informationen definiert, die an die Netzwerkvorrichtung (1) bereitgestellt werden sollen und einen aktuellen Standort der drahtlosen Kommunikationsvorrichtung (2) und den aktuellen Standorts von mindestens einer gewählten Anzahl k anderer Drahtloskommunikationsvorrichtungen (8ⱼ), die auf den standortbasierten Service zugreifen, enthalten, und dessen vorhergehender Standort ebenfalls in jedem vorhergehenden Standortbereich enthalten war, der zuvor für die Drahtloskommunikationsvorrichtung (2) bestimmt wurde;
wobei das Verfahren **dadurch gekennzeichnet ist, dass**, wenn eine Fläche des bestimmten Standortbereichs größer ist, als ein gewählter Grenzwert, ein kleinerer Standortbereich bestimmt wird, der die Informationen definiert, die an die Netzwerkvorrichtung (1) bereitgestellt werden sollen, und dann die Informationen, die mit einer anderen Benutzerkennung verknüpft sind, die ebenfalls mit der Drahtloskommunikationsvorrichtung (2) verknüpft ist, an die Netzwerkvorrichtung (1) bereitgestellt werden.

2. Verfahren nach Anspruch 1, wobei der kleinere Standortbereich aus einer Gruppe von Mengen aktueller und vorhergehender Standortbereiche bestimmt wird, die nach ihren jeweiligen Flächen sortiert sind und die jeweils mit den Benutzerkennungen verknüpft sind, die mit der Drahtloskommunikationsvorrichtung (2) verknüpft sind.

3. Verfahren nach Anspruch 2, wobei in der Gruppe ein aktueller Standortbereich bestimmt wird, der die kleinste Fläche aufweist, um der kleinere Standortbereich zu werden, der an die Netzwerkvorrichtung (1) bereitgestellt werden soll.

4. Verfahren nach Anspruch 2, wobei in der Gruppe ein aktueller Standortbereich bestimmt wird, der eine Fläche ausweist, die größer ist, als ein aktueller Standortbereich, der die kleinste Fläche aufweist, um eine größere Flexibilität in künftigen Bestimmungen unter Verwendung der verknüpften Benutzerkennung bereitzustellen.

5. Computerprogrammprodukt, umfassend einen Satz Anweisungen, die, wenn es durch ein Verarbeitungsmittel ausgeführt wird, angeordnet sind, um das Verfahren nach einem der Ansprüche 1 bis 4 durchzuführen, um die Bereitstellung von Informationen, die für einen Standort von Drahtloskommunikationsvorrichtungen (2) stehen, die jeweils mit mindestens einer Benutzerkennung verknüpft sind, an eine Netzwerkvorrichtung (1), die mit einem standortbasierten Service verknüpft ist, zu erlauben.

6. Vorrichtung (9) zur Bestimmung von Informationen, die für einen Standort von Drahtloskommunikationsvorrichtungen (2) stehen, die jeweils mit mindestens einer Benutzerkennung verknüpft sind, wobei die Vorrichtung (9) angeordnet ist um bei Empfang einer Standortanfrage von einer der Drahtloskommunikationsvorrichtungen (2) einen Standortbereich zu bestimmen, der die Informationen definiert und einen aktuellen Standort der anfragenden Drahtloskommunikationsvorrichtung (2) und den aktuellen Standort von mindestens einer gewählten Anzahl k anderer Drahtloskommunikationsvorrichtungen (8ⱼ) enthält, deren jeweils vorhergehender Standort ebenfalls in jedem vorhergehenden Standortbereich enthalten ist, der zuvor für die anfragende Drahtloskommunikationsvorrichtung (2) bestimmt wurde;
**dadurch gekennzeichnet, dass** die Vorrichtung (9) ferner angeordnet ist, um eine kleinere Standortfläche zu bestimmen, die die Informationen definiert, und um die Informationen mit einer anderen Benutzerkennung zu verknüpfen, die ebenfalls mit der anfragenden Drahtloskommunikationsvorrichtung (2) verknüpft ist, wenn eine Fläche des bestimmten Standortbereichs größer ist, als ein gewählter Grenzwert.

7. Vorrichtung nach Anspruch 6, wobei diese angeordnet ist, um den kleineren Standortbereich aus einer Gruppe von Mengen aktueller und vorhergehender Standortbereiche zu bestimmen, die nach ihren jeweiligen Flächen sortiert sind und die jeweils mit den Benutzerkennungen verknüpft sind, die mit der anfragenden Drahtloskommunikationsvorrichtung (2) verknüpft sind.

8. Vorrichtung nach Anspruch 7, wobei diese angeordnet ist, um in der Gruppe einen aktuellen Standortbereich zu bestimmen, der die kleinste Fläche aufweist, um der kleinere Standortbereich zu werden.

9. Vorrichtung nach Anspruch 7, wobei diese angeordnet ist, um in der Gruppe einen aktuellen Standortbereich zu bestimmen, der eine Fläche ausweist, die größer ist, als ein aktueller Standortbereich, der die kleinste Fläche aufweist, um eine größere Flexibilität in künftigen Bestimmungen unter Verwendung der verknüpften Benutzerkennung bereitzustellen.

## Revendications

1. Procédé pour fournir à un équipement de réseau (1), associé à un service basé sur la localisation, des informations représentant une localisation d'un équipement de communication sans fil (2) associé à au moins un identifiant d'utilisateur, ledit procédé comprenant une étape pendant laquelle on détermine une zone de localisation définissant lesdites informations à fournir audit équipement de réseau (1), et comprenant une localisation actuelle dudit équipement de communication sans fil (2) et une localisation actuelle d'au moins un nombre k choisi d'autres équipements de communication sans fil (8ⱼ) ayant accès audit service basé sur la localisation et dont chaque précédente localisation a été également incluse dans chaque zone de localisation précédente déterminée auparavant pour ledit équipement de communication sans fil (2) ;
ledit procédé étant **caractérisé en ce que**, lorsqu'une surface de ladite zone de localisation déterminée est plus importante qu'un seuil choisi, on détermine une zone de localisation plus petite définissant lesdites informations à fournir audit équipement de réseau (1) et, ensuite, on fournit audit équipement de réseau (1) lesdites informations associées à un autre identifiant d'utilisateur également associé audit équipement de communication sans fil (2).

2. Procédé selon la revendication 1, dans lequel on détermine ladite zone de localisation plus petite à partir d'un groupe d'ensembles de zones de localisation actuelles et précédentes triées en fonction de leurs surfaces respectives et associées respectivement auxdits identifiants d'utilisateur qui sont associés audit équipement de communication sans fil (2).

3. Procédé selon la revendication 2, dans lequel on détermine dans ledit groupe une zone de localisation actuelle ayant la surface la plus petite afin de devenir ladite zone de localisation plus petite qui doit être fournie audit équipement utilisateur (1).

4. Procédé selon la revendication 2, dans lequel on détermine dans ledit groupe une zone de localisation actuelle ayant une surface plus importante que celle d'une zone de localisation actuelle ayant la plus petite surface pour fournir davantage de flexibilité lors de déterminations futures à l'aide de son identifiant d'utilisateur associé.

5. Produit-programme d'ordinateur comprenant un ensemble d'instructions conçu, lorsqu'il est exécuté par des moyens de traitement, pour réaliser le procédé selon l'une quelconque des revendications 1 à 4 pour permettre la fourniture à un équipement de réseau (1), associé à un service basé sur la localisation, d'informations représentant une localisation d'équipements de communication sans fil (2) associés chacun à au moins un identifiant d'utilisateur.

6. Dispositif (9) pour déterminer des informations représentant une localisation d'équipements de communication sans fil (2) associés chacun à au moins un identifiant d'utilisateur, ledit dispositif (9) étant conçu, lorsqu'il reçoit une demande de localisation en provenance de l'un desdits équipements de communication sans fil (2), pour déterminer une zone de localisation définissant lesdites informations et comprenant une localisation actuelle dudit équipement de communication sans fil demandeur (2) et une position actuelle d'au moins un nombre k choisi d'autres équipements de communication sans fil (8ⱼ) dont chaque précédente localisation a été également incluse dans chaque zone de localisation précédente déterminée auparavant pour ledit équipement de communication sans fil demandeur (2) ;
**caractérisé en ce que** le dispositif (9) est en outre conçu, lorsqu'une surface de ladite zone de localisation déterminée est plus importante qu'un seuil choisi, pour déterminer une zone de localisation plus petite définissant lesdites informations et pour associer lesdites informations à un autre identifiant d'utilisateur également associé audit équipement de communication sans fil demandeur (2).

7. Dispositif selon la revendication 6, dans lequel il est conçu pour déterminer ladite zone de localisation plus petite à partir d'un groupe d'ensembles de zones de localisation actuelles et précédentes triées en fonction de leurs surfaces respectives et associées respectivement auxdits identifiants d'utilisateur qui sont associés audit équipement de communication sans fil demandeur (2) .

8. Dispositif selon la revendication 7, dans lequel il est conçu pour déterminer dans ledit groupe une zone de localisation actuelle ayant la surface la plus petite afin de devenir ladite zone de localisation plus petite.

9. Dispositif selon la revendication 7, dans lequel il est conçu pour déterminer dans ledit groupe une zone de localisation actuelle ayant une surface plus importante que celle d'une zone de localisation actuelle ayant la surface la plus petite pour fournir davantage de flexibilité lors de déterminations futures à l'aide de son identifiant d'utilisateur associé.
